Europäisches Patentamt

(19) European Patent Office   (11) Numéro de publication: **0 258 085**

Office européen des brevets   **B1**

(12)   **FASCICULE DE BREVET EUROPEEN**

(45) Date de publication du fascicule du brevet: **23.01.91**   (51) Int. Cl.⁵: **G 01 C 19/44,** G 01 C 19/32

(21) Numéro de dépôt: **87401672.8**

(22) Date de dépôt: **16.07.87**

(54) Horizon gyroscopique.

(30) Priorité: **25.07.86 FR 8610804**

(43) Date de publication de la demande:
**02.03.88 Bulletin 88/09**

(45) Mention de la délivrance du brevet:
**23.01.91 Bulletin 91/04**

(84) Etats contractants désignés:
**DE GB IT**

(56) Documents cités:
**FR-A-1 142 614**
**GB-A- 824 101**
**GB-A-2 107 059**
**US-A-4 583 094**

(73) Titulaire: **SEXTANT AVIONIQUE S.A.**
**Immeuble le Galilée Parc Tertiaire de Meudon**
**5/7 rue Jeanne Braconnier**
**F-92366 Meudon la Forêt Cédex (FR)**

(72) Inventeur: **Boyer, Francis**
**9 rue des Magnolias**
**F-78990 Elancourt (FR)**

(74) Mandataire: **Bloch, Gérard**
**2, square de l'Avenue du Bois**
**F-75116 Paris (FR)**

EP 0 258 085 B1

Courier Press, Leamington Spa, England.

## Description

La présente demande concerne un indicateur d'assiette gyroscopique du genre comportant d'une part un gyroscope suspendu à la Cardan dans deux cadres, l'un intérieur, l'autre extérieur, articulés l'un dans l'autre autour de deux axes orthogonaux et, d'autre part, des moyens de détection de la position spatiale de l'axe de gyroscope et de visualisation de cette position sous forme d'un horizon artificiel.

Les indicateurs d'assiette longitudinale et latérale, familièrement appelés "horizon", sont bien connus dans les milieux aéronautiques.

On sait que lorsqu'un avion amorce autour de son axe de tangage un mouvement de piqué, la ligne d'horizon, éventuellement perçue par le pilote, tend à "s'élever" dans le champ visuel de ce dernier. A l'inverse lorsque l'avion amorce un mouvement de cabré, la ligne d'horizon tend à "s'abaisser" dans le champ visual du pilote. De même lorsque l'avion amorce un mouvement de roulis, par exemple vers la gauche, la ligne d'horizon éventuellement perçue par le pilote amorce, quant à elle, un mouvement de rotation dans le sens des aiguilles d'une montre dans son champ visuel, tandis que lorsque l'avion engage un mouvement de roulis vers la droite la ligne d'horizon amorce un mouvement de rotation en sens inverse.

On sait aussi que lorsque l'avion engage un mouvement combiné sur ses axes de tangage et de roulis il en résulte, dans le champ visuel du pilote un mouvement combiné de la ligne d'horizon dans les sens rappelés ci-dessus.

L'indicateur d'assiette longitudinale et latérale, est un appareil disposé sur la planche de bord, de façon à être bien visible du ou des pilotes, ayant pour fonction de schématiser dans une image dynamique, sur laquelle est notamment représentée une ligne d'horizon, la silhouette de l'avion par rapport à cette ligne d'horizon lorsque l'avion effectue des mouvements simples ou combinés sur ses axes de tangage et/ou de roulis. Ainsi lorsque la ligne réelle d'horizon n'est pas visible par suite d'un vol à très haute altitude ou dans des conditions de vols sans visibilité, le pilote connaît, d'un seul coup d'oeil, à l'aide de l'horizon, l'assiette latérale et longitudinale de son avion.

Il existe diverses familles de procédés permettant de créer une image dynamique illustrant de façon schématique les mouvements d'une ligne d'horizon artificiel par rapport à la représentation schématique d'un avion. Le procédé concerné par la présente invention appartient à celle connue sous l'appellation d'"horizon gyroscopique".

D'une manière générale un horizon gyroscopique comporte:

—un gyroscope comportant notamment une masse entraînée par un moteur en rotation à très haute vitesse — plusieurs milliers de tours par minute — l'axe de rotation de cette masse étant en fait l'axe du gyroscope.

—des moyens érecteurs adaptés à maintenir l'axe du gyroscope dans une direction aussi proche que possible de celle de la verticale du lieu survolé par l'éronef dans lequel est embarqué l'horizon gyroscopique.

—des moyens capteurs de la position de l'axe du gyroscope dans l'espace et des moyens de visualisation de cette position sous la forme d'un horizon artificiel.

Dans une forme de réalisation d'horizon gyroscopique connue notamment du brevet français No. 1.142.614 déposé par la Demanderesse et correspondant à la définition ci-dessus le gyroscope est suspendu à la Cardan dans deux cadres articulés l'un dans l'autre autour de deux axes orthogonaux. L'horizon gyroscopique est monté sur la planche de bord de l'aéronef concerné en sorte que l'axe d'articulation de cadre extérieur soit parallèle à l'axe de roulis dudit aéronef. Les moyens de visualisation comportent une sphère partiellement tronquée en sorte qu'elle présente une forme globale de tonneau. Ce "tonneau sphérique" est articulé autour de son axe longitudinal de symétrie et monté sur une structure appropriée de telle sorte que cet axe longitudinal de symétrie est parallèle à l'axe d'articulation du cadre interne portant le gyroscope. Il en résulte que l'axe de rotation du tonneau de visualisation est perpendiculaire à l'axe du gyroscope, et qu'ainsi grâce aux moyens erecteurs mentionnés plus haut, lorsque le gyroscope est en fonctionnement, l'axe de rotation du tonneau reste perpendiculaire à la direction de la verticale du lieu géographique survolé par l'aéronef.

Dans cette forme de réalisation l'horizon gyroscopique comporte une roue dentée montée solidaire en rotation avec le cadre intérieur autour de l'axe d'articulation de ce cadre intérieur avec le cadre extérieur. Cette roue dentée est d'ailleurs disposée à l'intérieur du cadre extérieur. Elle engrène, de façon indirecte avec une roue dentée solidaire en rotation avec le tonneau de visualisation autour de son axe longitudinal de symétrie, en sorte que lorsqu'on observe un déplacement angulaire du cadre intérieur par rapport au cadre extérieur dans un sens, le tonneau de visualisation fait une rotation en sens inverse d'un angle identique ou proportionnel audit déplacement angulaire.

L'ensemble de cette structure est monté dans un boîtier comportant en face avant un écran transparent au milieu duquel est schématisée une sihouette d'avion. Un horizon artificiel est schématisé sur le tonneau sphérique de visualisation par un arc de grand cercle disposé selon un plan comportant l'axe longitudinal de symétrie du tonneau sphérique. L'ensemble est monté en sorte que lorsque l'avion est en vol droit et horizontal la silhouette d'avion schématisée sur la face transparente du boîtier coïncide avec l'horizon artificiel.

En fonctionnement, de façon bien connue, l'horizon artificiel prend, en temps réel, une position par rapport à la silhouette d'avion schématisée sur la face avant du boîtier correspondant sensiblement à la position de l'aéronef dans l'espace aérien.

Ainsi lorsque l'aéronef présente une assiette neutre autour de son axe de roulis la position de la silhouette par rapport à la ligne d'horizon artificiel, donne une mesure de l'assiette longitudinale de l'avion. De même lorsque l'aéronef présente une assiette neutre autour de son axe de tangage, la position de la silhouette par rapport à la ligne d'horizon artificiel représente l'assiette de l'aéronef sur son axe de roulis. Lorsque l'aéronef engage un mouvement combiné autour de ses axes de tangage et de roulis la position de la silhouette par rapport à la ligne d'horizon artificiel reste sensiblement représentative de celle de l'aéronef par rapport à l'horizontale dans l'espace aérien.

Ce type d'horizon gyroscopique s'est révélé à l'usage particulièrement efficace puisqu'il est notamment employé comme horizon de secours dans de très nombreux aéronefs équipés pour le vol aux instruments.

Il est en effet possible d'utiliser cet horizon comme instrument de secours en cas de panne de l'alimentation des instruments de bord. En effet lorsque le moteur du gyroscope voit son alimentation coupée, le gyroscope continue, grâce à l'inertie élevée de sa masse, à tourner à vitesse élevée jusqu'à ce que des frottements résiduels arrêtent cette rotation. Mais en règle générale l'horizon artificiel continue, de ce fait, à remplir son office pendant un temps compris entre 5 et 10 minutes en sorte que le pilote dispose d'une indication d'assiette pendant ce laps de temps.

Malgré la fiabilité éprouvée de ces horizons gyroscopiques la Demanderesse a poursuivi ses études et développements dans ce domaine avec pour objectif de simplifier la structure mécanique du gyroscope, en vue d'accroître la fiabilité de l'horizon gyroscopique et d'en diminuer le prix de revient.

La présente invention réalise cet objectif puisqu'elle est notamment caractérisée en ce que les moyens de détection et de visualisation de la position spatiale de l'axe du gyroscope comportent un écran visualisation lié en rotation avec ledit cadre extérieur, un capteur de la position angulaire du cadre intérieur par rapport au cadre extérieur, des moyens de traitement adaptés à visualiser sur l'écran ladite position angulaire sous forme d'un horizon artificiel.

Le fait de lier en rotation l'écran de visualisation avec le cadre extérieur permet de simplifier de façon considérable l'agencement mécanique des horizons gyroscopiques et notamment de ceux de l'art antérieur rappelé succinctement plus haut. Il en résulte une amélioration de la fiabilité des horizons gyroscopiques puisque la dynamique de l'image générée par cet instrument ne reste mécanique que pour les mouvements de roulis tandis qu'elle est générée par des moyens électroniques appropriés dont il va être question plus loin pour représenter les mouvements de montée et d'abaissement relatifs de l'horizon. Il en résulte le fait que tous les moyens liés au tonneau sphérique de visualisation, ou à l'équivalent de cet élément dans d'autres réalisations, n'ont plus lieu d'être. Cette économie de moyens se traduit aussi, bien évidement, par une économie sur le plan financier.

Selon une autre caractéristique particulièrement avantageuse de la présente invention l'écran de visualisation est du type à cristaux liquides.

Grâce à cette disposition l'écran peut être réalisé de façon simple, commode, fiable et de surcroît économique.

De plus les cristaux liquides consomment peu d'énergie ce qui, d'une manière générale, est avantageux pour un instrument de navigation, et l'est d'autant plus s'il s'agit d'un instrument dit de secours.

Dans un mode préféré de réalisation, appelé version simplifiée, l'écran de visualisation est du type à cristaux liquides dédiés agencés pour partie au moins pour visualiser sur l'écran des segments parallèles entre eux.

Il faut noter ici que les caractéristiques de l'invention précédemment mentionnées selon lesquelles l'écran de visualisation est lié, ou, de façon préférée, solidaire en rotation avec le cadre extérieur dans lequel le gyroscope est monté, permettent de résoudre d'autres problème techniques qui se sont posés à la Demanderesse à l'occasion de ses études et développements mentionnés ci-dessus concernant l'augmentation de la fiabilité, et la simplification structurelle des horizons gyroscopiques.

'Il a en effet été imaginé d'utiliser un écran de visualisation fixe à cristaux liquides, de type matriciel, tandis que deux capteurs angulaires auraient été prévus pour déterminer la position spatiale de l'axe du gyroscope. Une électronique appropriée aurait permit de convertir les signaux issus des capteurs en sorte que ladite position spatiale de l'axe du gyroscope soit représentée sous forme d'un horizon artificiel sur l'écran matriciel.

Or, la Demanderesse à constaté qu'une telle réalisation impliquait l'emploi d'une technologie en l'état actuel passablement compliquée, coûteuse et peu fiable.

En effet une telle solution, séduisante de prime abord, impliquait d'une part, l'emploi d'un écran matriciel à très forte résolution et, d'autre part, l'emploi, dans ladite électronique appropriée, d'un générateur de lignes obliques pour représenter, en temps réel, les mouvements de l'horizon.

Or, au moment de dépôt de la présente demande, à la connaissance de la Demanderesse, il n'existe pas sur le marché d'écran matriciel à cristaux liquides à la fois simple, bon marché et de qualité suffisante pour pouvoir être utilisé dans un instrument de vol particulièrement important comme l'horizon gyroscopique.

Certes des développements de tels écrans sont en cours et l'on peut prévoir qu'il apparaîtra sur le marché des écrans fiables dans lesquels chaque point ("pixel") est commuté par un transistor à couches minces disposé sur le verre au verso de l'écran. La Demanderesse a d'ailleurs procédé à des essais sur des prototypes.

Cependant, comme mentionné plus haut, la solution de l'écran fixe implique, dans l'électronique associée, la présence d'un générateur de lignes obliques. Un tel générateur doit comporter un calculateur et une importante quantité d'électronique. On sait que la fiabilité (moyenne des temps de bon fonctionnement: MTBF) est en relation inverse au nombre de composants. Or le nombre prévu de composants pour le générateur était tel que la fiabilité prévue risquait d'être faible pour un instrument principalement de secours. De plus la consommation d'énergie prévue était, quant à elle, beaucoup trop élevée.

Ainsi donc au cours des études et développements précités, la Demanderesse est arrivée à la conclusion qu'il convenait d'éviter tant l'emploi d'un générateur de lignes obliques que celui, du moins dans un premier temps, d'un écran à cristaux liquides de type matriciel.

Les caractéristiques générales de l'invention évoquées plus haut résolvent ce double problème technique. En effet le fait de lier en rotation l'écran de visualisation avec le cadre extérieur permet d'éviter l'emploi de deux capteurs angulaires, le traitement analytique de deux signaux angulaires et la génération de lignes obliques. Seule la position angulaire du cadre intérieur par rapport au cadre extérieur doit être déterminée, ce qui peut se faire au moyen d'un seul capteur et représentée sous forme d'une ligne d'horizon sur l'écran rotatif. Dès lors les moyens de traitement électroniques ne travaillent qu'en une seule dimension et on évite notamment ainsi l'emploi du calculateur mentionné plus haut.

En employant un écran à cristaux liquides dédiés, une partie au moins de ces cristaux liquides étant agencée pour visualiser sur l'écran des segments parallèles entre eux, on peut représenter ainsi d'une façon particulièrement simple l'élévation et l'abaissement de la ligne horizon, tandis que la rotation de l'écran concomitante avec celle du cadre extérieur, reflète la rotation de la ligne d'horizon en fonction des mouvements de roulis de l'avion.

En définitive on dispose ainsi d'un horizon gyroscopique dont la structure mécanique est particulièrement simplifiée, dont l'image dynamique est avantageusement lumineuse et reflète les mouvements de l'horizon artificiel de façon au moins aussi satisfaisante que dans l'art antérieur et dont l'électronique associée est de structure particulièrement simple.

La connaissance du milieu aéronautique a amené la Demanderesse à étudier une seconde forme de réalisation de l'invention, dite version complète.

En effet, dans certains cas, il apparaît nécessaire de compléter l'indication d'horizon artificiel (sous forme d'une ligne d'horizon) par d'autres indications chiffrées ou symbolisées comme par exemple: pente, pente potentielle, cap, trajectoire d'approche, etc.

A cet effet dans la version complète selon l'invention l'écran de visualisation est du type matriciel. Avantageusement il est du type à cristaux liquides et comporte une pluralité de points ("pixel") commutés par leur transistor associé, ce dernier étant par exemple du type à couches minces et déposé sur le verre au verso de l'écran.

Il convient tout d'abord de noter que les développements récents des écrans matriciels à points ("pixel"), notamment sur les plans de la fiabilité et de la résolution, permettent d'en prévoir avantageusement l'emploi tant dans l'aviation générale que dans l'aviation militaire, à moyen terme.

La Demanderesse a pu constater que grâce à l'emploi d'un tel écran matriciel, il est possible, au moyen d'une électronique adéquate, d'animer de façon appropriée une symbolique complexe. Cependant comme l'écran reste lié en rotation au cadre extérieur du gyroscope, on évite l'emploi d'un générateur de lignes obliques pour animer en temps réel la ligne d'horizon artificiel et tous les éléments de figurations qui y sont associés. De ce fait, en déplit de l'apparente complication de l'image de cette version complète par rapport à celle de la version simplifiée, la quantité d'électronique nécessaire demeure modérée et la fiabilité ne diminue pas de façon sensible.

Au cours de développement de l'horizon gyroscopique, objet de la présente demande de brevet d'invention, la Demanderesse a été confrontée à un autre problème technique tenant au fait que ses clients souhaitent de plus en plus, dans certaines applications au moins, disposer d'un horizon artificiel dont l'encombrement longitudinal est réduit par rapport à ceux existant sur le marché.

De plus, il est parfois souhaitable de corriger quelque peu la représentation des mouvements de l'horizon artificiel sur l'axe de tangage. Une telle correction peut s'avérer fort utile pour représenter de façon adéquate des mouvements combinés de tangage et de roulis, par exemple.

Or avec l'horizon gyroscopique de l'art antérieur rappelé plus haut une telle correction est complexe puisque les mouvements de l'axe du gyroscope sont mécaniquement transmis au tonneau de visualisation.

La présente invention permet de résoudre l'un et l'autre de ces deux problèmes techniques puisque selon une de ses caractéristiques, l'écran de visualisation est entraîné en rotation au moyen d'un moteur asservi à la position angulaire du cadre extérieur du gyroscope.

Une telle disposition permet un gain de place important dans le sens longitudinal par le fait qu'il est possible, en évitant une liaison directe entre cadre extérieur du gyroscope et écran de visualisation, de décaler cer dernier par rapport audit cadre.

De plus, la liaison en rotation du cadre avec l'écran résultant de l'asservissement, il est possible d'intégrer, soit dans l'électronique utilisée dans cet asservissement, soit dans l'électronique commandant le déplacement de l'horizon artificiel sur l'écran (dans le sens du tangage) soit dans chacun de ces deux moyens électroniques, des moyens permettant "de corriger" la position de l'horizon artificiel compte tenu de paramètres prédéterminés.

Selon d'autres caractéristiques de l'invention on associe à l'horizon artificiel une batterie tampon, qui selon une forme préférée de réalisation est du type au cadmium nickel, cette batterie étant interposée entre l'alimentation des instruments du tableau de bord et les moyens de traitement et l'écran de visualisation.

Grâce à ces dispositions en cas de panne de l'alimentation des instruments du tableau de bord, les moyens de traitement et l'écran de visualisation continuent à être alimentés par cette batterie tampon. On notera à cet égard que la consommation des cristaux liquides étant notoirement faible et l'électronique simplifiée utilisée consommant peut d'énergie, on peut obtenir un fonctionnement de ces éléments, au moyen d'une batterie de très faible capacité, pendant le laps de temps au cours duquel le gyroscope continue à fonctionner du fait de sont inertie élevée. Ainsi l'horizon gyroscopique selon la présente invention peut être utilisé comme horizon de secours sur les avions équipés pour le vol aux instruments.

Les caractéristiques et avantages de la présente invention ressortiront d'ailleurs de la description qui va suivre faite en référence aux dessins annexés sur lesquels:

—la figure 1 est une schématique en perspective d'un mode de réalisation de l'horizon gyroscopique selon l'invention,

—la figure 2 est une vue schématique en perspective avec des arrachements partiels illustrant plus en détail l'horizon gyroscopique de la figure 1,

—la figure 3 est une vue en perspective avec un arrachement partiel d'un gyroscope de type connu,

—la figure 4 est un schémabloc illustrant l'intéraction de divers organes d'un autre mode de réalisation de l'horizon gyroscopique selon l'invention,

—la figure 5 est une vue schématique illustrant en perspective avec arrachements partiels cet autre mode de réalisation,

—la figure 6 est une vue de l'écran de visualisation de l'horizon gyroscopique représenté sur la figure 5.

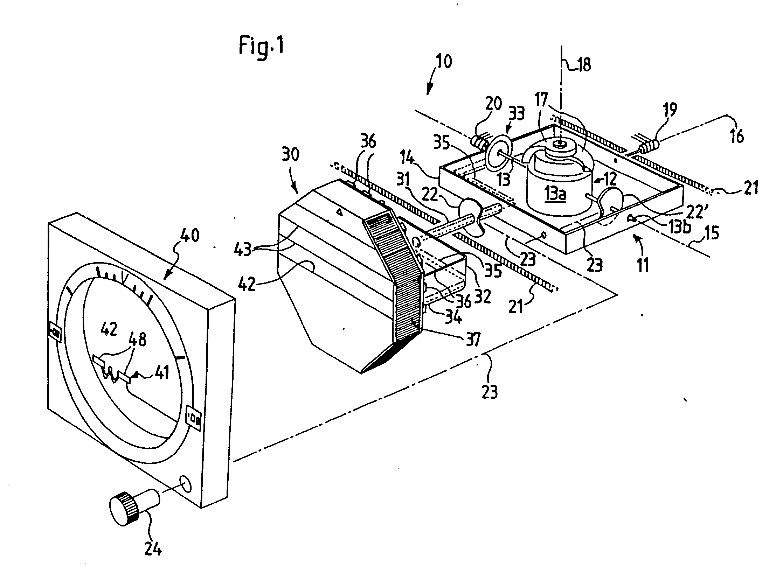

Selon la forme de réalisation choisie et représentée en figure 1, un horizon gyroscopique 10 comporte un ensemble gyroscope 11 de structure en soi connue.

L'ensemble gyroscope 11 comporte un gyroscope 12 suspendu à la cardan dans deux cadres. Un premier de ces derniers consiste ici en fait en une barre d'articulation 13 solidaire d'une structure 13a de support du gyroscope 12. Le deuxième cadre, dit extérieur, est référencé en 14.

On observe que les deux cadres sont articulés l'un dans l'autre, autour de deux axes orthogonaux, un premier de ceux-ci étant appelé "axe de tangage" et référence en 15, tandis que le second est appelé "axe de roulis" et référencé en 16. A cet effet, la barre d'articulation 13 est articulée sur le càdre extérieur 14 au moyen de tourillons, un de deux-ci étant visible sur la figure 1 et référencé en 13b. Le cadre extérieur 14 est monté et articulé de façon classique sur une structure de support schématisée en 21.

Le gyroscope 12 comporte de façon bien connue un moteur non visible sur cette figure, ce moteur étant animé, en fonctionnement, d'un mouvement de rotation de plusieurs milliers de tours par minute autour d'un axe référence en 18, appelé axe de gyroscope. On observe que cet axe 18 est orthogonal à l'axe de tangage 15.

Le moteur est alimenté, à partir d'une source d'énergie électrique non représentée, via deux éléments 19 et 20 respectivement appelés collecteur de roulis et collecteur de tangage, amenant l'énergie électrique requise au moteur de gyroscope.

Des moyens érecteurs schématisés par les masselottes 17 sont prévus et ont pour fonction d'amener l'axe de gyroscope 18 dans une orientation parallèle à la verticale du lieu survolé par l'aéronef dans lequel est monté l'horizon gyroscopique 10.

Des moyens de recalage du gyroscope à partir d'une action manuelle du pilote sont prévus tant sur les axes de roulis (dispositif 22) que sur celui de tangage (dispositif 22'). Ces moyens de recalage sont commandés de façon classique par un bouton 24 actionné par le pilote et agissant sur un dispositif schématisé en 23 sur la figure 1.

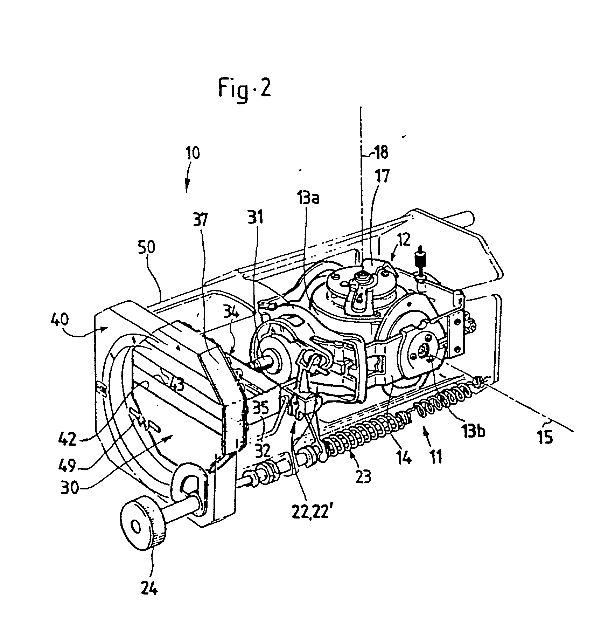

La figure 2 illustre plus en détail la structure représentée en figure 1. Les éléments de la figure 1 visibles sur cette figure 2 portent les mêmes références sur les deux figures.

L'ensemble gyroscope 11, et en particulier ses éléments référencés 12 à 24 sur les figures sont bien connus de l'homme de l'art, d'autant plus qu'au jour du dépôt de la présente demande plusieurs milliers de tels ensembles sont installés dans les avions tant civils que limitaires, de nombreuses nationalités.

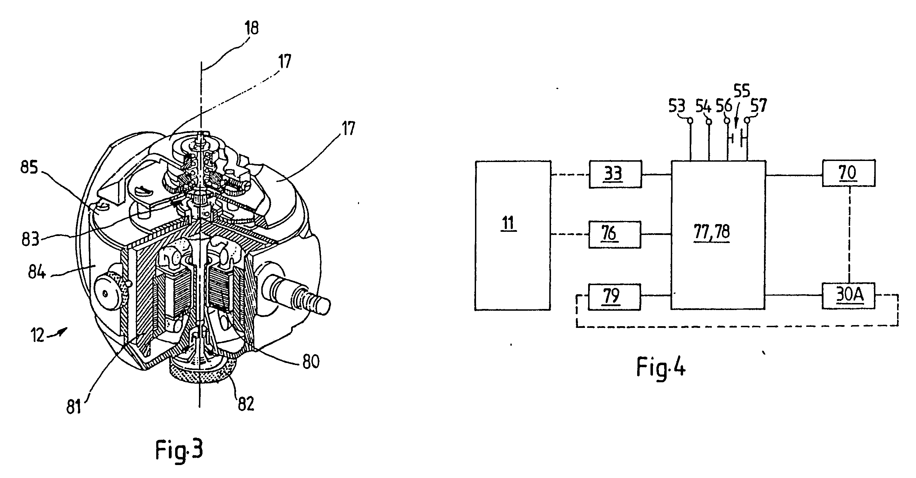

De façon classique, et ainsi que représenté sur la figure 3, le gyroscope 12 comporte un moteur comprenant un stator 80 fixe et un rotor 81, généralement mit "toupie", tournant autour de l'axe 18, par exemple à 24000 tours par minute. Le rotor est lié aux masselottes d'érection 17 par l'intermédiaire d'un réducteur 83 ayant par exemple un rapport de réduction tel que les masselottes 17 tournent à 40 tours par minute. Un bol 84 et un couvercle 85 jouent le rôle d'un carter. Un balourd 82 permet l'équilibrage selon l'axe 18.

La structure et le fonctionnement de ce gyroscope sont bien connus, il n'est donc pas nécessaire ici de les décrire plus en détails.

On se référera maintenant à la figure 2. D'une manière générale, selon l'invention, l'horizon gyroscopique 10 comporte un écran de visualisation 30 lié en rotation avec le cadre extérieur 14.

Dans la forme de réalisation choisie et représentée, l'écran de visualisation 30 est un écran à cristaux liquides. Plus précisément il s'agit ici de cristaux liquides dédiés, ces cristaux liquides étant agencés, selon une autre caractéristique de l'invention, pour visualiser sur l'écran des segments parallèle entre eux.

Dans la forme de réalisation choisie et représentée sur les figures 1 et 2. La liaison en rotation entre l'écran 30 et le cadre extérieur 14 résulte du montage solidaire en rotation de cet écran 30 avec le cadre extérieur 14. Ce montage est ici réalisé par l'intermédiaire d'un arbre 31 coaxial à l'axe de roulis 16 rapporté à l'une de ses extrémités sur le cadre extérieur 14 et à l'autre extrémité sur un étrier 32 de support de l'écran 30.

D'une manière générale, selon l'invention l'horizon gyroscopique comporte un capteur de la position angulaire du cadre intérieur, ici les éléments 13, 13a, par rapport au cadre extérieur 14. Dans la forme de réalisation choisie et représentée, le capteur 33 comporte un potentiomètre dont la résistance instantanée est représentative de la position angulaire du cadre intérieur par rapport au cadre extérieur ou, en d'autres termes, de la position angulaire de l'axe de gyroscope 18 autour de l'axe de tangage 15.

D'une manière générale, l'horizon gyroscopique comporte des moyens de traitements adaptés à visualiser sur l'écran ladite position angulaire sous forme d'un horizon artificiel.

Daks la forme de réalisation choisie et représentée, ces moyens de traitement consistent en une électronique 34, dont certains éléments sont visibles sur les figures et référencés en 36, cette électronique 34 étant raccordée par des câbles schématisés en 35 au capteur potentiométrique 33.

Il a été dit plus haut que dans le mode de réalisation représenté en figures 1 et 2, l'écran de visualisation 30 est un écran à cristaux liquides de type dédié adapté à visualiser des segments parallèles entre eux. On observe, figure 1, qu'en position dite neutre, l'écran visualise d'une part, une portion foncée limitée par une ligne horizontale, dite d'"horizon" 43 et, d'autre part, une portion claire comportant plusieurs lignes 43 parallèles à la ligne d'horizon 42. Les lignes 42 et 43 sont d'ailleurs parallèles au plan formé par les axes de tangage 15 et de roulis 16.

De façon classique l'horizon artificiel 10 comporte un boîtier face avant 40 destiné à être disposé sur le tableau de bord en vue du pilote. Ce boîtier comporte ici une glace de visualisation circulaire 49, au milieu de laquelle est disposée une maquette 41 comportant deux branches horizontales ou ailes 48. Le bouton 24 de commande du dispositif de recalage est disposé sur cette face avant 40.

On notera que dans le mode de réalisation représenté, l'écran de visualisation 30 est octogonal, la connection entre les cristaux liquides et l'électronique se faisant au moyen d'un film souple 37 disposé sur la tranche de l'écran de visualisation. La glace de visualisation 42 est d'un diamètre sensiblement inférieur à la distance diamétrale existant entre deux pans de l'octogone formant l'écran de visualisation. A l'intérieur du boîtier face avant 40 est ménagé un logement (non visible sur les figures) permettant la libre rotation de l'écran 30.

Sur la figure 2 ont été représentés certains des éléments montrés sur la figure 1, à savoir l'écran de visualisation 30, l'arbre 31, l'étrier 32, l'électronique 34, le film souple 37, la face avant 40, les lignes 42 et 43. De plus un boîtier 50 contenant l'ensemble de l'appareil est partiellement représenté sur cette figure. Cette figure 2 illustre l'aspect réel de l'appareil selon la présente invention, tandis que la figure 1, par ses simplifications, permet mieux d'en percevoir la structure fonctionnelle.

Le fonctionnement de l'ensemble gyroscopique 11 est tout-à-fait classique. Le moteur du gyroscope 12 présente une vitesse de rotation de plusieurs milliers de tours par minute. Le gyroscope 12 présente une masse particulièrement bien équilibrée. L'axe 18 de gyroscope prend une orientation et la conserve.

De façon classique l'action des masselottes érectrices 17 a pour effet d'amener l'axe 18 dans l'alignement de la verticale du lieu survolé par l'aéronef dans lequel est monté l'horizon gyroscopique 10.

Le pilote peut agir sur le bouton de recalage 24 pour aligner le plan formé par les axes de tangage 15 et de roulis 16 de l'horizon gyroscopique 10 sur celui des axes de tangage et de roulis de l'avion. Cette action est tout-à-fait classique et est nécessaire lorsque les évolutions de l'avion sont telles que l'axe 18 n'a pu conserver son alignement sur la verticale du lieu.

D'une manière générale, le capteur angulaire 33 présente en sortie une grandeur représentative de la position angulaire du cadre intérieur par rapport au cadre extérieur ou, en d'autres termes, de l'axe de gyroscope 18 autour de l'axe de tangage 15. Dans la forme de réalisation choisie et représentée, le capteur 33 étant du type potentiométrique, la grandeur de sortie est une tension proportionnelle à la valeur de l'angle.

L'électronique 34 est adaptée à traiter l'information présente en sortie du capteur 33 et à visualiser cette dernière sur l'écran de visualisation 30 sous forme d'un horizon artificiel. En pratique, l'électronique 34 positionne la ligne l'horizon 42, sur l'écran 30 en sorte que lorsque l'avion est en vol horizontal cette ligne 42 est parallèle au plan formé par les ailes 48 de la maquette 41 et coïncide avec ces dernières.

Comme l'écran de visualisation 30 est solidaire en rotation avec le cadre extérieur 14 et que la ligne 42 est parallèle au plan formé par les axes 15, 16, la ligne d'horizon 42 se trouve être continuellement perpendiculaire à l'axe de gyroscope 18, et, par conséquent, perpendiculaire à la verticale du lieu.

Comme l'écran de visualisation 30 est libre en rotation par rapport au boîtier de face avant 40 qui, lui, est fixe sur la planche de bord de l'avion dans lequel est monté l'horizon 10, l'angle que présente à tout instant le plan des ailes 48 de la maquette 41 par rapport aux lignes 42, 43 est représentatif en temps réel de l'assiette latérale de l'avion.

En résumé, la position de la ligne d'horizon artificiel 42 sur l'écran 30 est, par l'intermédiaire du capteur 33 et de l'électronique 34, représentative de l'assiette longitudinale de l'avion tandis que la position angulaire de cette ligne par rapport au plan des ailes 48 de la maquette 41 est représentative de l'assiette latérale de l'aéronef.

On dispose ainsi d'un horizon gyroscopique très intéressant par sa simplicité, puisque la position de l'avion sur son axe de roulis est donnée par des moyens mécaniques, tandis que celle de l'avion sur son axe de tangage est donnée par des moyens électroniques particulièrement simples puisqu'ils ne fonctionnement qu'en une seule dimension (angle de tangage dans le cas présent).

On va maintenant décrire à l'appui des figures 4 à 6, une variante de réalisation de l'horizon gyroscopique selon l'invention. Sur ces figures, les éléments de structure semblables à certains des éléments des figures 1 et 2 portent les mêmes références.

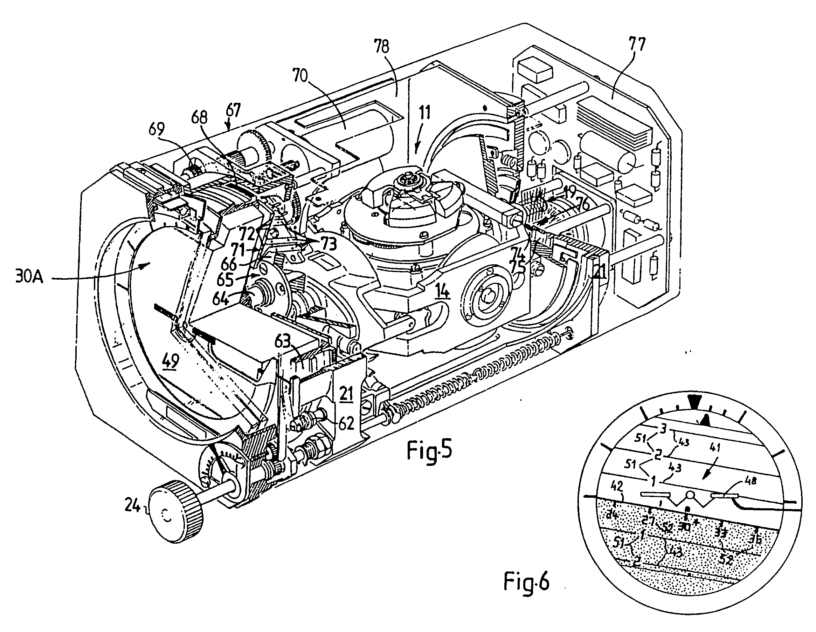

L'horizon illustré sur la figure 5 comporte d'une part, un ensemble gyroscopique 11 de structure semblable à cette décrite à l'appui des figures 1 et 2 et, d'autre part, un écran de visualisation 30A lié en rotation avec le cadre extérieur 14 de l'ensemble gyroscopique 11.

L'écran de visualisation 30A est monté à rotation dans la structure 21 de support que présente l'horizon. Plusieurs roulettes de guidage 62 sont montées sur cette structure 21, une seule d'entre-elles étant visible sur la figure 5, (cette figure présentant des arrachements partiels pour mieux illustrer certaines caractéristiques de cette variante de l'horizon gyroscopique selon l'invention).

On observe que l'écran de visualisation est, dans cette forme de réalisation, circulaire et que les roulettes de guidage 62 coopérent avec le chant périphérique 63 de l'écran pour guider ce dernier.

L'écran 30A est monté sur un bras axial 64 lui-même monté dans un pallier 65 disposé dans une paroi 66 verticale de support de la structure 21.

Au voisinage du chant périphérique de guidage 63 de l'écran de visualisation 30A est disposée une couronne dentée 68. Cette couronne engrène avec un pignon 69 relié par un réducteur 67 à un moteur d'entraînement et de positionnement en roulis de l'écran de visualisation 30A, ce moteur étant référencé en 70.

Un circuit 71 à pistes circulaires 72 centrées sur l'axe de rotation de l'arbre 64 est solidaire de l'écran 30A et coopère avec un circuit à balais 73 monté sur la paroi 66 pour réaliser un collecteur de courant entre l'écran mobile 30A et la structure fixe 21, l'une des pistes étant potentiométrique afin de réaliser un capteur de position angulaire pour l'asservissement de la rotation de l'écran.

Un autre capteur de position angulaire est monté à l'arrière de l'ensemble gyroscopique 11. Il comporte un circuit 74 à piste plastique circulaire solidaire de l'ensemble gyroscopique 11 coopérant avec un circuit 75 à balais (non visibles sur la figure) monté sur la structure fixe 21. Ce capteur est adapté à délivrer un signal représentatif de la position angulaire du cadre extérieur 14 par rapport à une position de référence neutre. Ce capteur, référencé de façon générale en 76, est dit capteur de roulis.

Un capteur de la position angulaire du cadre intérieur 13 et 13b par rapport au cadre extérieur 14 (capteur de tangage) est également prévu et est disposé comme décrit à l'appui des figures 1 et 2, ainsi que des collecteurs de roulis et de tangage.

Dans ce mode de réalisation, des circuits électroniques 77 et 78 sont prévus et disposés respectivement derrière et au-dessus de l'ensemble gyroscopique 11, les composants du circuit 78 n'ayant pas été représentés pour la clarté du dessin.

La figure 6 représente plus particulièrement l'écran de visualisation 30A qui est de type matriciel à cristaux liquides dans ce mode de réalisation.

Au moment du dépôt de la présente demande, la Demanderesse envisage d'employer un écran comportant une multitude de points "pixel", commutés par leur transistor associé, ce dernier étant du type à couche mince et déposé sur le verre au verso de l'écran. Bien entendu, tout autre type d'écran matriciel existant ou à venir peut convenir.

On constate qu'une série d'indications chiffrées sont prévues sur l'écran. Les lignes de niveau 43 présentent ainsi une indication chiffrée, référence 51. Des paramètres représentatifs du cap suivi par l'avion dans lequel est monté l'horizon gyroscopique 10A sont prévus et disposés en-dessous de la ligne d'horizon artificiel 42. Ces paramètres représentatifs du cap suivi sont références en 52.

On va maintenant décrire à l'appui de la figure 4 un schéma bloc montrant l'intéraction des divers éléments illustrés en figure 5. Sur cette figure, les interactions de nature physique ou mécanique sont schématisées en traits pointillés, tandis que les flux d'information électrique sont schématisés en traits pleins.

On reconnaît sur la gauche de la figure 1 l'ensemble gyroscopique 11. La position angulaire du cadre intérieur par rapport au cadre extérieur est mesurée par le capteur de tangage 33, tandis que la position angulaire du cadre extérieur par rapport à une position fixe de référence (celle du plan défini par les axes de tangage et de roulis de l'avion) est mesurée par le capteur de roulis 76. Les informations issues de ce capteur potentiométrique viennent en entrée des circuits électroniques 77 et 78. En entrée de ces circuits est également présente l'information issue du capteur, référence ici 79, mesurant la position angulaire de l'écran de visualisation 30A par rapport à la même position neutre, ce capteur comportant une piste plastique 72 et un balai 73.

En sortie des circuits 77 et 78, il y a, d'une part, une information de commande du moteur 70 et, d'autre part, des informations d'affichage sur l'écran 30A. L'intéraction du moteur 70 et de l'écran 30A par l'intermédiaire du réducteur 67, du pignon 69 et de la couronne dentée 68 est également schématisée sur cette figure.

Les circuits 77 et 78 reçoivent également de divers organes de l'avion, par l'intermédiaire de leurs bornes 53 et 54 diverses informations (pente, pente potentielle, cap, trajectoire d'approche, etc...).

Dans ce mode de réalisation, une batterie tampon 55 est également prévue et disposée entre les deux bornes d'alimentation 56, 57 des circuits électroniques 77 et 78 et du moteur 70. En fonctionnement normal, les bornes 56, 57 sont raccordées à la source d'énergie des instruments du tableau de bord par l'intermédiaire de circuits de sécurité en soi connus.

Le fonctionnement de l'horizon gyroscopique illustré en figures 4 et 5 est le suivant:

La liaison en rotation du cadre extérieur avec l'écran de visualisation 30A résulte de l'asservissement de ce dernier par le moteur d'asservissement 70 et les moyens électroniques 77 et 78. Le capteur 76 mesure en temps réel la position angulaire du cadre extérieur 14. En sortie de ce capteur 76 est donc présent un signal représenatatif de cette position angulaire. De même en sortie du capteur 79 est présent un signal représentatif de la position angulaire de l'écran de visualisation 30A. Un signal d'erreur est généré dans les moyens électroniques 77 et 78 et ce signal d'erreur agit, par l'intermédiaire de circuits électroniques tout à fait classiques d'asservissement, sur le moteur 70.

La position angulaire de l'écran de visualisation 30A est donc représentative, en temps réel, de la position angulaire du cadre extérieur 14 et, par conséquent, de l'angle de roulis de l'avion.

Les moyens électroniques sont adaptés à commuter l'ensemble des points "pixel" que présente l'écran de visualisation 30A. Les divers symboles illustrés en figure 6 sont donc ainsi générés.

Comme dans le mode de réalisation illustré en figures 1 et 2, le signal en sortie du capteur 33 permet de positionner, par l'intermédiaire des moyens électroniques 77 et 78, la position de l'horizon artificiel selon l'axe de tangage.

De plus, les informations présentes sur les bornes 53 et 54 sont traitées par les moyens électroniques 77 et 78 est visualisées sur l'écran 30A sous forme de symbole.

On notera qu'avantageusement les moyens électroniques 77 et 78 peuvent être adaptés pour corriger les informations issues des capteurs de tangage 33 et de roulis 76 compte tenu des mouvements éventuels combinés de l'avion sur ces deux axes. En ce cas, l'information transmise à l'écran de visualisation et/ou au moteur d'entraînement peut être corrigée pour tenir compte de ces mouvements combinés. Une telle caractéristique sera bien évidemment très appréciée par les pilotes.

Il convient d'observer que, malgré, l'apparente complexité de l'électronique 77 et 78 dans le mode de réalisation présentement décrit, le fait de lier en rotation, au moyen du moteur asservi 70, l'écran 30A avec le cadre extérieur 14 de l'ensemble gyroscope 11 permet d'éviter l'emploi d'un calculateur compliqué qui aurait été nécessaire s'il avait fallu générer en temps réel des lignes obliques sur l'écran de visualisation.

Or, cette caractéristique de l'invention permet, justement, d'éviter d'avoir à générer de telles lignes obliques et on évite ainsi l'emploi d'un tel calculateur.

De plus, on notera que, pour le positionnement sur l'écran en temps réel de la ligne d'horizon 42 et des lignes de graduation 43, l'électronique 77 et 78 ne travaille à partir du signal issu du capteur de tangage 33 qu'en une seule dimension.

On notera également que le mode de réalisation illustré en figure 5 présente un encombrement longitudinal sensiblement inférieur à celui illustré en figure 2 du fait du désaccouplement du cadre extérieur 14 d'avec l'écran 30A.

On notera enfin que la batterie 55, qui dans le mode de réalisation illustré est une batterie au cadmium-nickel, permet d'alimenter l'électronique 77 et 78 et le moteur 70 en cas de coupure de la source principale d'énergie aux bornes 56, 57. Cette alimentation dure pendant un laps de temps (de l'ordre de 10 mn environ) pendant lequel le gyroscope 12 continue à remplir son office par inertie. Ainsi l'horizon de la figure 5 (et, d'ailleurs, l'horizon 10 des figures 1 et 2 s'il leur est adjoint une telle batterie tampon) peut remplir avantageusement l'office d'horizon gyroscopique de secours.

Bien entendu, la présente invention ne se limite nullement aux modes de réalisation décrits et représentés, mais englobe au contraire toutes variantes.

C'est ainsi qu'en lieu et place de l'écran de visualisation à cristaux liquides, il est possible d'utiliser tout autre moyen de visualisation équivalent.

De même, il est possible d'utiliser dans le mode de réalisation décrit à l'appui de la figure 5 un écran à cristaux liquides de type dédié et inversement dans le mode de réalisation décrit à la figure 2, un écran de visualisation de type matriciel avec les avantages qui en découlent.

Des informations de toute nature peuvent être traitées par les moyens électroniques 77 et 78 et visualisées sur l'écran 30 ou 30A compte tenu de la nature de ces écrans.

Tout type de moteur d'asservissement et de circuit d'asservissement peut être bien évidemment utilisé. De plus, l'entraînement de l'écran 30A peut très bien résulter d'autres dispositifs que le réducteur 67, la couronne dentée 68 et le pignon 69.

**Revendications**

1. Horizon gyroscopique du genre comportant d'une part un gyroscope (12) suspendu à la Cardan dans deux cadres, l'un intérieur (13, 13a), l'autre extérieur (14) articulés l'un dans l'autre, autour de deux axes orthogonaux (15, 16) et, d'autre part, des moyens de détection de la position spatiale de l'axe du gyroscope et de visualisation de cette position sous forme d'un horizon artificiel caractérisé en ce que les moyens de détection et de visualisation de la position spatiale de l'axe du gyroscope comportent un écran de visualisation lumineux (30, 30A) lié en rotation avec ledit cadre extérieur (14), un capteur (33) de la position angulaire du cadre intérieur par rapport au cadre extérieur, des moyens de traitement adaptés à visualiser sur l'écran ladite position angulaire sous forme d'un horizon artificiel.

2. Horizon gyroscopique selon la revendication 1, caractérisé en ce que ledit écran de visualisation (30) est monté solidaire en rotation avec le cadre extérieur (14).

3. Horizon gyroscopique selon l'une quelconque des revendications 1 ou 2, caractérisé en ce que l'écran de visualisation (30, 30A) est du type à cristaux liquides.

4. Horizon gyroscopique selon la revendication 3, caractérisé en ce que l'écran de visualisation est du type à cristaux liquides dédiés et en ce que les cristaux liquides sont agencés au moins pour partie d'entrée eux pour visualiser sur l'écran des segments parallèles entre eux.

5. Horizon gyroscopique selon l'une quelconque des revendications 1 et 2, caractérisé en ce que l'écran de visualisation est du type matriciel.

6. Horizon gyroscopique selon la revendication 5, caractérisé en ce que l'écran de visualisation comporte une pluralité de points "pixel" commutés par leur transistor associé, ce dernier étant du type à couche mince et déposé sur le verre au verso de l'écran.

7. Horizon gyroscopique selon l'une quelconque des revendications 1, 3 à 6, caractérisé en ce que ledit écran de visualisation (30A) est entraîné en rotation au moyen d'un moteur (70) asservi à la position angulaire du cadre extérieur (14) du gyroscope.

8. Horizon gyroscopique selon l'une quelconque des revendications 1 à 7, caractérisé en ce qu'on lui associe une batterie "tampon" (55).

9. Horizon gyroscopique selon la revendication 8, caractérisé en ce que la batterie tampon (55) est du type au cadmium nickel.

**Patentansprüche**

1. Kreiselhorizont mit einem in zwei Rahmen kardanisch aufgehängtem Kreisel (12), wobei ein innerer (13, 13a) im anderen äußeren (14) Rahmen um zwei orthogonale Achsen (15, 16) frei beweglich ist, sowie mit Mittel zur Erkennung der räumlichen Lage der Achse des Kreisels und zur Sichtbarmachung dieser Lage in Form eines künstlichen Horizonts, dadurch gekennzeichnet, daß die Mittel zur Erkennung und zur Sichtbarmachung der räumlichen Lage der Achse des Kreisels einen mit dem äußeren Rahmen (14) drehbar verbundenen Anzeige-Leucht-Bildschirm (30, 30A), einen die Winkelstellung des inneren Rahmens mit Bezug auf den äußeren Rahmen erfassenden Sensor (33) und Verarbeitungsmittel zur Sichtbarmachung der Winkelstellung in Form eines künstlichen Horizonts auf dem Bildschirm, umfassen.

2. Kreiselhorizon nach Anspruch 1, dadurch gekennzeichnet, daß der Anzeige-Bildschirm (30) mit dem äußeren Rahmen (14) drehfest verbunden ist.

3. Kreiselhorizont nach einem der Ansprüche 1 oder 2, dadurch gekennzeichnet, daß der Anzeige-Bildschirm (30, 30A) ein Flüssigkristallbildschirm ist.

4. Kreiselhorizont nach Anspruch 3, dadurch gekennzeichnet, daß der Anzeige-Bildschirm vom Typ applikationsspezifischer Flüssigkristalle ist, und daß die Flüssigkristalle zumindest zum Teil untereinander so angeordnet sind, daß auf dem Bildschirm untereinander parallele Segments darstellbar sind.

5. Kreiselhorizon nach einem der Ansprüche 1 und 2, dadurch gekennzeichnet, daß der Anzeige-Bildschrim vom Matrix-Typ ist.

6. Kreiselhorizont nach Anspruch 5, dadurch gekennzeichnet, daß der Anzeigebildschirm eine vielzahl von "Pixels" umfaßt, die durch ihren beigeordneten Transistor umgeschaltet werden, wobei dieser letztere vom Dünnschicht-Type ist, und auf dem Glas auf der Rückseite des Bildschirms aufgebracht ist.

7. Kreiselhorizont nach einem beliebigen der Ansprüche 1, 3 bis 6, dadurch gekennzeichnet, daß der Anzeige-Bildschirm (30A) durch einen Motor (70) in Rotation gebracht wird, welcher Motor der Winkelstellung des äußeren Rahmens (14) des Kreisels nachgeführt ist.

8. Kreiselhorizont nach einem der Ansprüche 1 bis 7, dadurch gekennzeichnet, daß man ihm eine Pufferbatterie (55) beiordnet.

9. Kreiselhorizont nach Anspruch 8, dadurch gekennzeichnet, daß die Pufferbatterie (55) vom Nickel-Cadmium-Typ ist.

**Claims**

1. Gyroscopic horizon of the type comprising, on the one hand, a gyroscope (12) suspended on gimbals in two frames, one of which being an inner frame (13, 13a) and the other an outer frame (14) articulated one with each other, about two orthogonal axis (15, 16) and, on the other hand, means for sensing the position in space of the axis of the gyroscope and for displaying these position as an artificial horizon, characterized in that the means for sensing and for displaying the spatial position of the axis of the gyroscope comprise a luminous display screen (30, 30A) rotationaly coupled to said outer frame (14), a sensor (33) of the angular position of said inner frame relative to said outer frame, processor means adapted for displaying on the screen said angular position as an artificial horizon.

2. Gyroscopic horizon according to claim 1, characterized in that said display screen (30) is constrained to rotate with said outer frame (14).

3. Gyroscopic horizon according to anyone of claim 1 or 2, characterized in that said display screen (30, 30A) is a liquid crystal display screen.

4. Gyroscopic horizon according to claim 3, characterized in that said display screen is of the dedicated liquid crystal type and at least some of the liquid crystals thereof are arranged to form parallel segments on said display screen.

5. Gyroscopic horizon according to anyone of claims 1 and 2, characterized in that said display screen is a matrix display screen.

6. Gyroscopic horizon according to claim 5, characterized in that the display screen comprises a plurality of pixels and a respective switching transistor for each pixel, the transistor being of the thin-film type deposited onto the glass on the rear surface of said screen.

7. Gyroscopic horizon according to anyone of claims 1, 3 to 6, characterized in that said display screen (30A) is rotated by a motor (70) servo-controlled on the angular position of said outer frame (14) of the gyroscope.

8. Gyroscopic horizon according to anyone of claims 1 to 7, characterized in that it is associated with a back-up battery (55).

9. Gyroscopic horizon according to claim 8, wherein said back-up battery (55) is nickel-cadmium type.

Fig.1

EP 0 258 085 B1

## Fig·2

Fig.3

Fig.4

EP 0 258 085 B1

Fig.5

Fig.6